(19) Europäisches Patentamt
European Patent Office
Office européen des brevets

(11) Publication number: 0 096 526
B1

(12) # EUROPEAN PATENT SPECIFICATION

(45) Date of publication of patent specification: **21.09.88**

(51) Int. Cl.$^4$: **C 09 D 5/08**

(21) Application number: **83303101.6**

(22) Date of filing: **31.05.83**

(54) **Anti-corrosive paint.**

(30) Priority: **01.06.82 GB 8216000**
**10.11.82 GB 8232097**
**05.05.83 GB 8312362**

(43) Date of publication of application:
**21.12.83 Bulletin 83/51**

(45) Publication of the grant of the patent:
**21.09.88 Bulletin 88/38**

(84) Designated Contracting States:
**BE DE FR GB IT NL SE**

(56) References cited:
**FR-A-2 383 223**
**GB-A-1 261 554**
**US-A-4 017 315**
**US-A-4 040 842**
**CHEMICAL ABSTRACTS, vol. 84, no. 12, 22nd March 1976, page 92, no. 75799k, Columbus, Ohio, USA**

**The file contains technical information submitted after the application was filed and not included in this specification**

(73) Proprietor: **INTERNATIONAL PAINT Public Limited Company**
**18 Hanover Square**
**London W1A 2BB (GB)**

(72) Inventor: **Reeder, Frank**
**Laburnum House 50 Front Street**
**Whitburn near Sunderland (GB)**
Inventor: **Nunn, Michael John**
**204 Osborne Road**
**Jesmond Newcastle-upon-Tyne (GB)**
Inventor: **Mitchell, Michael James**
**34, Grosvenor Court**
**Newcastle-upon-Tyne (GB)**
Inventor: **Baxter, Kenneth Ford**
**Greybourne Gardens**
**Sunderland (GB)**

(74) Representative: **Hale, Stephen Geoffrey et al**
**J. Y. & G. W. Johnson Furnival House**
**14/18 High Holborn**
**London WC1V 6DE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 096 526 B1

**Description**

This invention relates to anti-corrosive coating compositions and to the use of salts comprising polyvalent metal cations and organic polyphosphonic acids as pigment component dispersed in a film-forming binder as a liquid anti-corrosive coating composition for application to metal surfaces, particularly iron and steel, as a protective paint against corrosion, rusting or rust staining. Anti-corrosive coatings are, for example, applied to bridges, steel structures which are exposed to weather for long periods during the erection of buildings, car, aeroplane and other vehicle bodies and components, agricultural machinery, oil installations and exposed steel work on ships. An anti-corrosive coating (a "shop primer") may be applied to freshly blasted steel plate which is to be stored before use in construction or shipbuilding.

Anti-corrosive paint generally comprises a film-forming binder and one or more pigments. The pigments which have been regarded as most efficient in preventing corrosion are red lead and the chromates, particularly zinc chromate. Unfortunately both red lead and the chromates are now considered to be health hazards. Many anti-corrosive paints sold at present contain zinc phosphate as anti-corrosive pigment, but the performance of paints containing zinc phosphate has not been as good as those containing red lead or zinc chromate. The present invention seeks to provide a paint giving better protection of iron and steel from rusting than zinc phosphate paints and without using chemicals regarded as health hazards.

Many phosphates, phosphonates and polyphosphates have been used as corrosion and scale inhibitors in aqueous systems. Among these are hydroxy-ethylidene-1,1-diphosphonic acid, also known as etidronic acid, and its salts, whose use is described in GB—A—1,201,334 and 1,261,554 and US—A—3,431,217, 3,532,639 and 3,668,094, ethylene-1,1-diphosphonic acid described in GB—A—1,261,554 and amino compounds substituted by two or more methylene phosphonic acid groups described in GB—A—1,201,334 and US—A—3,483,133. The preparation of an under-based lead salt of etidronic acid having a molar ratio of lead to etidronate of 0.5:1 (ratio of lead to phosphonate groups 0.25:1) is described in US—A—4,020,091 and it use as a gelatinous pigment of high surface coverage power is described, although there is no mention of any anti-corrosive properties.

FR—A—2,383,223 discloses the application of metal salts of phosphonocarboxylic acids and/or phosphonic acids to metal objects as intumescent, fire-retarding agents which swell when subjected to heat so as to form a barrier layer. The metals used are preferably magnesium, calcium, strontium, chromium, aluminium, zinc or iron and the phosphonic acid can be a diphosphonic acid. GB—A—1,261,554 discloses the inhibition of corrosion of surfaces of ferrous metals, copper and brass in contact with corrosive aqueous media by incorporating into the aqueous media water-soluble complexes of certain organophosphorous ligands which can be derived from diphosphonic acids with zinc, nickel, cobalt and/or manganese ions. US—A—4,017,315 discloses the use of a corrosion-inhibiting pigment composed of zinc, calcium, strontium and/or barium molybdate and zinc, calcium and/or magnesium phosphate in a volume ratio of molydate; phosphate and from 2:1 to 3:1 in protective coating formulations for ferrous substrates. Comparative examples in US—A—4,017,315 disclose the poorer results are obtained when the proportion of phosphate by volume is equal to or more than the proportion of molybdate.

We have found that salts comprising a polyvalent metal cation and an organic polyphosphonic acid containing at least two phosphonic groups, the salts having an aqueous solubility of not more than 2 grams per litre, are particularly useful as pigments in anti-corrosion coating compositions, especially together with certain corrosion passivators, for protecting metal surfaces against corrosion, rusting and rust staining.

According to the invention in a first aspect there is provided an anti-corrosive coating composition comprising a pigment component comprising a phosphorus compound and a substance capable of acting as a corrosion passivator dispersed in a film-forming binder, characterised in that the pigment component comprises (a) a salt comprising a polyvalent metal cation and an organic polyphosphonic acid containing at least two phosphonic groups, the salt having an aqueous solubility of not more than 2 grams per litre, and (b) a corrosion passivator which is a molybdate, tungstate, vanadate, stannate, chromate, manganate, titanate, phosphomolybdate or phosphovanadate containing cations from a divalent metal, the ratio of the polyphosphonate salt (a) to the passivator (b) being 1:1 top 50:1 by weight.

The invention also includes the use of such a composition for application by spray or brush coating to a metal surface as a protective paint against corrosion, rusting or rust staining.

In a second aspect the invention provides for the use of certain of the organic polyphosphonates for such a purpose in the absence of the corrosion passivators.

Thus the invention includes the use of a salt of zinc and an organic polyphosphonic acid containing at least two phosphonic acid groups as pigment component dispersed in a film-forming binder as a liquid anti-corrosive coating composition for application by spray or brush coating to a metal surface as a protective paint against corrosion, rusting or rust staining, said salt having a molar ratio of zinc to phosphonate groups of from 0.7:1 to 1.5:1 and an aqueous solubility of not more than 2 grams per litre, and said composition being applied at a thickness of not more than 100 microns.

The invention further includes the use of a salt comprising a polyvalent metal cation and an organic polyphosphonic acid containing at least two phosphonic acid groups as pigment component dispersed in a film-forming binder as a liquid anti-corrosive coating composition for application by spray or brush coating

to a metal surface as a protective paint against corrosion, rusting or rust staining, said salt having the general formula $M_xR(PO_3)_m)H_{(2m-xn)}$, where M represents a metal ion selected from $M_xR(PO_3)_mH_{(2m-xn)}$, where M represents a metal ion selected from magnesium, calcium and barium, R represents an organic radical linked to the phosphonate groups by carbon-phosphorus bonds, m is the valency of the radical R and is at least 2, n is the valency of the metal ion M and x is from 0.8 m/n to 2 m/n, said salt having an aqueous solubility of not more than 2 grams per litre, and said composition being applied at a thickness of not more than about 100 microns.

The corrosion inhibition achieved by anti-corrosive paints has several effects, whose relative importance can differ from different uses of the paint. One effect is inhibiting the appearance of rust and the brown staining caused by rust. This is particularly important when the anti-corrosive paint is used as a primer to be covered by a paint whose main purpose is cosmetic. Another effect is inhibiting loss of metal by corrosion, which is particularly important when coating ships or industrial steel structures. A third effect is inhibiting the formation of corrosion products at the surface of the metal which would reduce the adhesion of subsequent coats of paint. This is particularly important for a shop primer. The paints proposed according to the invention can be substantially more effective than paints containing phosphates, such as the known anti-corrosive pigment zinc phosphate, in achieving any one of these effects. The polyphosphonate salt pigment can be chosen to give a particular anti-corrosive effect, although many of the polyphosphonate salt pigments are superior to zinc phosphate in substantially all respects.

One type of preferred polyphosphonate salt conforms to the general formula:—

$$M_x(R(PO_3)_mH_{(2m-xn)}),$$

where M represents a metal ion selected from zinc, manganese, magnesium, calcium, barium, aluminium, cobalt, iron, strontium, tin, zirconium, nickel, cadmium and titanium, R represents an organic radical linked to the phosphonate groups by carbon-phosphorus bonds, m is the valency of the radical R and is at least 2, n is the valency of the metal ion M and x is from 0.8 m/n to 2 m/n.

The valency m of the organic radical R is preferably 2 to 5. The polyphosphonate may be derived from a diphosphonic acid $R(PO_3)_2)_2$, for example a hydroxy-alkylidene-1,1-phosphonic acid of the formula:—

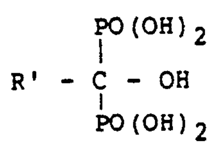

(I)

where R′ is a monovalent organic radical, preferably an alkyl group having 1 to 12 carbon atoms.

The polyphosphonate salt is preferably an etidronate since etidronic acid has the most phosphonate groups per unit weight of the acids of formula (I) and is available commercially. The acids of formula (I) can be readily prepared by reacting a carboxylic acid R′COOH with phosphorus trichloride and hydrolysing the reaction product.

An alternative type of polyphosphonic acid is an amino compound containing at least two N-methylenephosphonic acid groups. Such polyphosphonic acids can be prepared by the reaction of ammonia or an amine with formaldehyde and phosphorous acid. A diphosphonic acid of the formula:—

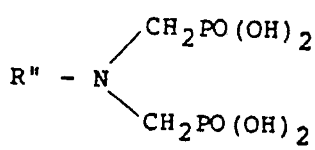

where R″ is a monovalent organic radical, preferably a substituted or unsubstituted alkly group having 1 to 12 carbon atoms such as propyl, isopropyl, butyl, hexyl or 2-hydroxyethyl, can be prepared from a primary amine. An example of a tri-phosphonic acid $R(PO_3H_2)_3$ is amino-tris(methylene-phosphonic acid) $N(CH_2PO(OH)_2)_3$ prepared from ammonia. Examples of tetra-phosphonic acids $R(PO_3H_2)_4$ are alkylene diamine tetra(methylenephosphonic acids) of the general formula:—

$$((OH)_2P(O)CH_2)_2N—Q—N(CH_2PO(OH)_2)_2$$

where Q is a divalent organic radical, preferably an alkylene group having 1 to 12 carbon atoms, for example ethylene diamine tetra(methylene-phosphonic acid) or hexamethylene diamine tetra(methylene-phosphonic acid). An alternative form of tetraphosphonic acid is an alkylene bis(1-hydroxymethyl-diphosphonic acid) of the formula:—

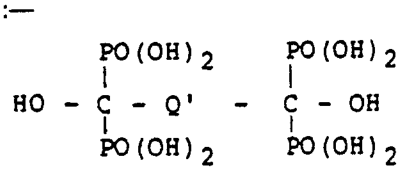

where Q′ has the same definition as Q. Examples of pentaphosphonic acids $R(PO_3H_2)_5$ are dialkylene and triamine penta(methylene-phosphonic aicds), for example diethylene triamine penta(methylene-phosphonic acid) of the formula:—

$$((OH)_2P(O)CH_2)_2NCH_2CH_2\underset{\displaystyle CH_2PO(OH)_2}{\underset{|}{N}}CH_2CH_2N(CH_2PO(OH)_2)_2$$

Polyphosphonic acids of higher functionality, including polymeric polyphosphonic acids, can be used, for example a polyethylene imine substituted by methylene phosphonic groups and having the formula:—

$$(OH)_2P(O)CH_2\left(\underset{\displaystyle CH_2PO(OH)_2}{\underset{|}{N}} - CH_2 - CH_2\right)_y N(CH_2PO(OH)_2)_2$$

where y is at least 3.

The optimum ratio of polyvalent metal to acid in the salt may vary from different metals; for example we have found that zinc etidronate is most effective in preventing corrosion when the molar ratio of zinc to etidronate is at least 1.2:1, for example 1.4:1 to 2:1 (ratio of zinc to phosphonate groups at least 0.6:1, for example 0.7:1 to 1:1) whereas manganese etidronate is most effective at a manganese to etidronate molar ratio of 1:1 to 1.5:1 (ratio of manganese to phosphonate groups of 0.5:1 to 0.75:1). Within these ranges, salts having a lower polyvalent metal to acid ratio are generally most effective in preventing rust staining but the salts having a higher polyvalent metal to acid ratio allow least overall corrosion as assessed by absence of underfilm corrosion.

The complex polyphosphonate salt can be formed by reacting a basic compound of the desired metal M, for example an oxide, hydroxide or carbonate of zinc, manganese, magnesium, barium or calcium, with an organic polyphosphonic acid, for example etidronic acid, in the desired molar proportions.

The salt-forming reaction is preferably carried out in aqeuous medium and the sparingly soluble salt is recovered as a precipitate. Examples of basic compounds are zinc oxide, calcium hydroxide and manganese carbonate. Mixtures of basic compounds, for example zinc oxide and calcium hydroxide, can be used to prepare a complex salt containing more than one metal M. An aqueous solution of organic polyphosphonic acid can be added to an aqueous organic polyphosphonic acid can be added to an aqueous slurry of the basic compound or vice versa. The slurry formed by the initial reaction of basic compound and acid of formula (I) may be heated, for example at 50—100°C. for 10 minutes to 24 hours, to ensure completion of the salt-forming reaction. The precipitated salt is then separated and dried; it is preferably washed with water before drying to remove any highly water-soluble material, particularly unreacted polyphosphonic acid.

Alternatively a soluble salt of the metal M can be reacted with the polyphosphonic acid or a soluble salt thereof, but care must be taken to wash the product free of any ion (such as chloride) which might promote corrosion.

The crystalline state of the complex salt varies according to the nature of the metal M, the polyphosphonate anion and the ratio of metal ion to polyphosphonate. Some metals form salts of well-defined crystalline form, whose stoichiometry and crystalline form may vary according to their method of preparation. Calcium etidronate, for example, forms two types of crystals with a calcium to etidronate ratio of 1:1, and florets of very small plate-like crystals with a calcium to etidronate ratio of 2:1. Other metals tend to form precipitated salts whose crystalline form is less well-defined and whose composition varies according to the ratio of metal and etidronate used in their manufacture, with no identifiable compounds of simple stoichiometry. Zinc etidronate, for example, prepared from zinc and etidronic acid in molar ratio 1.5:1 under varying reaction conditions forms mainly agglomerated acicular cyrstals of overall zinc to etidronate ratio above 1.3:1 up to 1.6:1.

The polyphosphonate salt may alternatively by overbased. The metal used in an overbased polyphosphonate salt is preferably a metal whose oxide is not markedly alkaline, for example zinc or manganese. For example an etidronate of a metal such as zinc may have a molar ratio of metal to acid up to 3:1. Such overbased salts may be of the general formula

$$M_zO_{\frac{(nz-2m)}{2}}R(PO_3)_m,$$

where M, R, m and n are defined as above and z is from 2 m/n to 3 m/n. They can be prepared by reacting an excess of a basic compound of the metal M, for example zinc oxide, with a polyphosphonic acid $R(PO_3)_mH_{2m}$, for example etidronic acid. In some cases overbased salts may be formed using an equivalent amount of basic metal compound and polyphosphonic acid. For example zinc oxide and etidronic acid reacted at a molar ratio of 2:1 can form an amorphous precipitate with a zinc to etidronate ratio in the range 2.3:1 to 2.7:1 together with fine plate-like crystals of zince to etidronate ratio about 1.8:1. Both forms, or a mixture of them, are effective anti-corrosive pigments.

The polyphosphonate salt can also contain cations from a strong base such as sodium, potassium, ammonium or substituted ammonium cations derived from amines, including quaternary ammonium cations, particularly when the metal M is present in less than a stoichiometric amount. These neutralise some or all of the excess acid groups in the salt so that the salt is less acidic in contact with water. Substitution of strong base cations for free acid groups generally increases the solubility of the salt. Such salts containing strong base cations may be of the general formula:—

$$M_xM'_yR(PO_3)_mH_{(2m-xn-y)}$$

where M, R, n, m and x are defined as above, M' is an alkali metal or an ammonium or substituted ammonion ion and the value of y is such that (xn + y) is from m to 2m. Salts of this type can be prepared by adding a strong base, for example sodium hydroxide, potassium hydroxide or a quaternary ammonium hydroxide such as tetrabutyl ammonium hydroxide to the slurry formed by reaction of a basic compound of polyvalent metal M with polyphosphonic acid $R(PO_3)_mH_{2m}$ or by reacting an aqueous solution of a partial alkali metal salt of a polyphosphonic acid of the general formula:—

$$M'_yR(PO_3)_mH_{(2m-y)}$$

with the desired amount of the basic compound of metal M.

The coating compositions provided according to the invention may contain as pigment component salts containing both polyphosphonate anions and other anions, for example phosphate anions, formed for example by coprecipitation.

Furthermore, coating compositions provided according to the invention may contain as pigment component particles of a substantially water-insoluble compound of a polyvalent metal reacted with an organic polyphosphonic acid so that the particles have a surface layer of metal polyphosphonate although the core of the particles may be unchanged water-insoluble metal compound. Pigments of this type may, for example, be formed by reacting an organic polyphosphonic acid with an excess of a metal oxide. The product may consist at least partly of coated oxide particles rather than a true overbased polyphosphonate salt. The metal oxide can, for example, be zinc oxide, tin oxide, iron oxide or a form of alumina, silica or zirconia having a proportion of hydroxyl groups at the surface of each particle. The particles of the water-insoluble metal compound used to make pigments of this type should preferably be less than 100 microns diameter, most preferably 1—20 microns.

The aqueous solubility of the polyphosphonate salt used as pigment is not more than 2 grams per litre, for example 0.01—2 grams per litre. The preferred solubility for the salt may vary according to the intended use of the coating composition. Salts used in paints which continuously or frequently come into contact with water, for example metal primers for marine use, preferably have a solubility less than 0.6 grams per litre, for example 0.02—0.1 grams per litre. The solubility of the salt is less critical when it is used in paints which conctact water less frequently, for example paints for use on cars, aircraft or land-based steel structures.

The film-forming binder for the anti-corrosive coating is preferably an organic polymer and can in general be any of those used in the paint industry, for example an alkyd resin, an epoxy resin, an oleoresin, a chlorinated rubber, a vinyl resin, for example polyvinyl butyral, a polyurethane, a polyester, an organic or inorganic silicate, a polyamide or an acrylic polymer. Two or more compatible film-forming organic polymers can be used in paint. An extender resin such as a hydrocarbon resin or a coal tar derivative can be present. We have found that the polyphosphonate salts used according to the invention give particularly improved corrosion protection compared to known anti-corrosive pigments such as zinc phosphate when used in alkyd resins, which are most widely used binders for protective coatings, and also give a marked improvement when used in epoxy resins.

The polyphosphonate salt is generally used as 2 to 100 per cent by weight of the total pigment in the paint, preferably as 5 to 50 per cent by weight of the total pigment.

As mentioned, we have found that particularly good corrosion protection can be achieved by paints containing as pigments the polyphosphonate salt and certain corrosion passivators, namely molybdates, tungstates, vanadates, stannates, chromates, manganates, titanates, phosphomolybdates or phosphovanadates containing cations from a divalent metal, the ratio of the polyphosphonate salt to the passivator being 1:1 to 50:1 by weight. Such anti-corrosive paints containing a polyphosphonate salt and a passivator can give a superior anti-corrosive effect to paints containing a known anti-corrosive phosphate pigment such as zinc phosphate both in terms of prevention of rust staining and in terms of prevention of loss of metal by corrosion.

The passivators used are corrosion inhibitors which act either alone or in conjunction with another chemical species to modify the metal oxide film on the metal to be protected to render it more positive. They can function without oxygen and are preferably capable of acting as an oxidising agent of the metal to be protected.

The passivator may for example be a molybdate, vanadate, tungstate, chromate, stannate, manganate, titanate, phosphomolybdate or phosphovanadate of zinc, calcium, manganese, barium or strontium or it may be a salt containing cations from a strong base, such as sodium, potassium, ammonium or substituted

ammonium cations, as well as cations from a divalent metal. Specific examples of passivators are zinc molybdate, sodium zinc molybdate, calcium molybdate, zinc vanadate, sodium zinc vanadate and zinc tungstate. Zinc chromate or potassium zinc chromate can be used, although it may be desired to have a chromate-free coating composition to avoid any possible health hazard. Molybdates and vanadates, particularly meta-vanadates, are preferred, particularly zinc molybdate, sodium zinc molybdate or zinc meta-vanadate. The passivator preferably contains zinc ions if the polyphosphonate salt does not. The passivators may be in the form of composite particles in which a molybdate or other passivator is precipitated on the surface of particles of a carrier pigment, for example sodium zinc molybdate may be in the form of a coating on a carrier pigment such as zinc oxide, titanium dioxide to talc as described in British Patent No. 1,560,826. The passivator preferably has a solubility of less than 2 grams per litre, for example 0.02 to 1 gram per litre.

The polyphosphonate salt and the passivator have a synergistic effect and give better corrosion inhibition when used in a paint together than either pigment used separately. This synergistic effect is particularly marked for polyphosphonate salts having a low ratio of polyvalent metal ions to phosphonate groups, so that the ratio of metal ions to phosphonate groups in a polyphosphonate salt to be used in conjunction with a passivator can be lower than when the polyphosphonate salt is used without a passivator. In general the ratio of polyvalent metal ions to phosphonate groups in the salt is at least 0.5/n:1, where n is the valency of the metal ion, when the salt is used with a passivator; ratios of 0.8/n:1 to 2/n:1 are preferred.

Among the preferred phosphonate salts for use in conjunction with a passivator are calcium, zinc, manganese, barium, magnesium or strontium salts containing 0.4—0.6 divalent metal ions per phosphonate groups, for example calcium etidronate having a molar ratio of calcium to etidronate groups of about 1:1. We have identified two crystalline etidronates of this type. When calcium hydroxide and etiodronic acid are reacted in water at a molar ratio of 0.6:1—1.2:1 and at a temperature above 70°C. a precipitate of plate-like crystals of particle size below 50 microns is formed. When calcium hydroxide and etidronic acid are reacted at the same ratio in water at below 70°C. a precipitate of acicular crystals is formed. Both these crystal forms have been analysed as containing a molar ratio of calcium to etidronate between 0.9:1 and 1:1. The acicular crystals can be converted to the plate-like crystals by heating in water at above 70°C., for example for 30 minutes. Although both these calcium etidronates are particularly effective corrosion inhibitors when used in conjunction with a passivator, the plate-like crystals are preferred because of their lower solubility in water (generally below 0.5 grams per litre) and lower particle size.

The ratio of polyphosphonate salt is passivator in the pigment component of the paint is preferably 2:1 to 20:1 by weight, most preferably 4:1 to 10:1. Within the latter range increasing proportions of passivator such as a molybdate salt have an increasing effect in inhibiting corrosion but as the weight of molybdate salt increases beyond 25 per cent based on the weight of the polyphosphonate salt, for example etidronate, there is no increase in corrosion inhibition. When the weight of molybdate increased beyond 50 per cent based on the weight of etidronate the corrosion inhibition may become less. While we cannot fully explain this surprising synergistic effect we believe that the passivator catalyses the formation of a corrosion-inhibiting layer at the metal surface.

The polyphosphonate salt can also be used in conjunction with other known anti-corrosive pigments such as a phosphate, for example zinc phosphate, silicate, borate, diethyldithiocarbamate or lignosulphonate or zinc dust or with an organic anti-corrosive additive such as a tannin, oxazole, imidazole, triazole, lignin, phosphate ester or borate ester. Minor amounts of a basic pigment such as calcium carbonate or zinc oxide can be used, particularly if the polyphosphonate salt gives a pH less than 5 on contact with water. The calcium etidronates having a molar ratio of calcium to etidronate of about 1:1 generally give a pH of 4.5 to 5.1 on contact with water. Calcium etidronate with a molar ratio of calcium etidronate of about 2:1 gives an alkaline pH. Zinc etidronates having a molar ratio of zinc to etidronate of below about 1.4:1 generally give a pH of 3.5 or below. Zinc etidronates having a molar ratio of zinc to etidronate of above 1.6:1 generally give a pH of 6 to 7.

The coating composition of the invention can contain substantially inert pigments as well as the polyphosphonate salt, for example titanium dioxide, talc or barytes and optionally small amounts of coloured pigments such as phthalocyanines. The pigment volume concentration of the paint is preferably 20—50 per cent depending upon the film-forming polymer used.

The coating compositions are most commonly used to prevent rusting of iron and steel but can also be used as anti-corrosive paints for metal surfaces other than iron. They can be furthermore used in pre-stressed concrete either to coat the stressing bars to prevent corrosion or as an exterior coating for the concrete to prevent rust staining.

The anti-corrosive coating is most usually applied to a metal surface by spray or brush using as vehicle an organic solvent in which the film-forming binder is dissolved or dispersed. The coating may harden by evaporation of solvent, by air drying and/or by a cross-linking mechanism depending on the nature of the binder. The coating can alternatively be applied from an aqueous dispersion, in which case it can be applied by spray, roller or brush or by electro-deposition using a film-forming binder which is an anionic or cationic resin. Alternatively the coating composition can be applied as a powder coating, for example by electrostatic spray, and fused and cured on the metal surface.

The invention is illustrated by the following Examples:—

Examples 1 to 7
Preparation of Polyphosphonate Salts

Example 1

184.8 grams (2.28 moles) zinc oxide was slurried at 20 per cent by weight in water and heated to 70°C. An aqueous solution containing 316 grams (1.52 moles) etidronic acid was diluted to 20 per cent by weight and heated to 70°C. The zinc oxide slurry was pumped into the etidronic acid solution over 45 minutes with continuous stirring of both the slurry and the solution. A precipitate formed after the addition of about 20 per cent of the zinc oxide. The slurry formed was stirred for 4 hours at 60—70°C. to allow the salt-forming reaction to take place. The slurry was then cooled and filtered on a Buchner funnel. The solid obtained was washed 4 times with distilled water using 2 litres of water each time to wash the salt free of etidronic acid. The wet filter cake was broken up and oven dried at 110°C. to obtain about 500 grams of zinc etidronate as a white solid with needle-like crystals. The solubility of the zinc etidronate was measured by slurrying it in distilled water, centrifuging and measuring the dissolved metal ion content. The metal ion content was 0.165 grams per litre, indicating a pigment solubility of 0.5 grams per litre.

Example 2

Calcium hydroxide (0.84 moles) was reacted with etidronic acid (1 mole) using the procedure of Example 1 to prepare calcium etidronate in the form of plate-like crystals.

Example 3

80.7 grams (2.00 moles) magnesium oxide was reacted with 207.8 grams (1.01 moles) etidronic acid using the procedure of Example 1 to prepare magnesium etidronate as a white solid.

Example 4

The preparation of Example 1 was repeated using 246.4 grams zinc oxide (3.04 moles) to prepare a zinc etidronate having theoretical zinc to etidronate molar ratio of 2:1.

Example 5

The preparation of Example 1 was repeated using 369.6 grams zinc oxide (4.56 moles) to prepare a zinc etidronate having a theoretical zinc to etidronate molar ratio of 3:1.

The solubilities of the pigments of Example 2 to 5 were as follows:—

| | Solubility in grams metal ion per litre | Solubility of pigment in grams per litre |
|---|---|---|
| Calcium etidronate of Example 2 | 0.037 | 0.261 |
| Magnesium etidronate of Example 3 | 0.069 | 0.355 |
| Zinc etidronate of Example 4 | 0.045 | 0.114 |
| Zinc etidronate of Example 5 | 0.034 | 0.078 |

Example 6

Barium carbonate was added portionwise to stirred solution of etidronic acid (136.3 grams, 0.66 mole) in 1,584 mls of distilled water. A precipitate remained after the addition of 64.9 grams of the barium carbonate. A further 195.9 grams of barium carbonate was added, giving a total of 1.32 mole, and the stirred mixture was diluted with distilled water (1,500 ml).

The mixture was heated to 50-55°C. for 1 hour, cooled, filtered and washed with distilled water. After drying at 110°C. a white solid weighing 313.7 grams was obtained.

The white solid was stirred in distilled water (1,000 ml) and 34.2 ml of concentrated hydrochloric acid was added. The mixture was stirred for 2½ hours, filtered, washed with distilled water and dried at 100°C. A white solid weighing 266.1 grams was obtained, barium etidronate.

Example 7

A 20 per cent aqueous solution of 316 grams etidronic acid was prepared as described in Example 1 and sodium hydroxide was added to it at a molar ratio of 1 mole sodium hydroxide to 2 moles etidronic acid to partially neutralise the acid. A 20 per cent slurry of 184.8 grams zinc oxide in water was then reacted with the partially neutralised etidronic acid solution using the procedure of Example 1 to prepare a zinc etidronate modified by sodium ions.

Examples 1 to 7
Paint Testing

The etidronates prepared as described in Examples 1 to 7 above were each used as the anti-corrosive pigment in an anti-corrosive paint. The etidronate was ball milled with the following ingredients until the particle size of the etidronate was 30—40 microns:—

| | Per Cent by Weight |
|---|---|
| Alkyd resin | 20.0 |
| Etidronate as prepared in one of the Examples 1 to 7 | 16.3 |
| Talc | 13.5 |
| Titanium dioxide | 9.6 |
| Driers and additives | 2.4 |
| Solvent xylene | 38.2 |

Each anti-corrosive paint was sprayed onto steel panels at a dry film thickness of 100—200 microns. When the paint film was dry two scribes were scratched through the paint film to reveal the underlying steel in the form of a cross. The panels were then subjected to 500 hours salt spray test as specified in British Standard BS 3900. In a comparative experiment paints were prepared having the formulation given above but using zinc phosphate (to British Standard BS 5193) in place of the etidronate.

After 500 hours in the salt spray test the panels were assessed with regard to blistering, rust spotting, corrosion in and around the scribe including under-film creep from the scribe and rust staining from the scribe. The paints of Examples 1 to 7 showed superior anti-corrosive performance compared to the paint containing zinc phosphate, particularly with regard to corrosion in and around the scribe and rust staining the scribe. The panels coated with the paint of Examples 1, 2, 4 and 7 showed less corrosion in all respect than the panels coated with the zinc phosphate paint. The panels coated with the paint of Example 5 showed less corrosion in and around the scribe than the panels coated with the zinc phosphate paint and were substantially equal to them in other respects. The panels coated with the paints of Examples 3 and 6 showed less rust staining from the scribe than the panels coated with the zinc phosphate paint and were substantially equal to them in other respects.

Example 8

Zinc etidronate prepared as described in Example 1 above was ball milled with the following ingredients to form an anti-corrosive paint in which the particule size of the zinc etidronate was 30 to 40 microns:—

| | Parts by Weight |
|---|---|
| Alkyd resin | 20.0 |
| Zinc etidronate | 16.3 |
| Sodium zinc molybdate | 4.0 |
| Talc | 13.5 |
| Titanium dioxide | 9.6 |
| Dryers and additives | 2.4 |
| Xylene solvent | 38.2 |

Examples 9 and 10

Anti-corrosive paints were prepared as described in Example 8 but using in Example 9 manganese etidronate prepared as described below and in Example 10 the calcium etidronate prepared in Example 2. In each of these examples all of the zinc etidronate was replaced by an equal weight of the manganese or caclium etidronate.

To prepare the manganese etidronate, manganous carbonate (87.0 grams, 0.75 moles) was reacted with etidronic acid (154.0 grams, 0.75 moles) using the same procedure as in Example 1. The product was a pink solid.

Example 11

An anti-corrosive paint was prepared according to Example 10 but increasing the amount of sodium zinc molybdate to 8.0 parts by weight.

Example 12

An anti-corrosive paint was prepared according to Example 10 but decresing the amount of sodium zinc molybdate to 2.0 parts by weight.

Example 8—12
Paint testing

The anti-corrosive paints of each of Examples 8 to 12 were sprayed onto mild steel panels at a dry film thickness of 100 to 200 microns. When the paint film was dry two scribes were scratched through the paint film to reveal the underlying steel in the form of a cross. The panels were then subjected to 1,200 hours salt spray test as specified in British Standard BS 3900. The panels were assessed after testing for resistance to rust staining and blistering both generally and at the scribe. The paint of Example 2 was tested similarly as a comparison which did not use a passivator.

Comparative tests were carried out in which the paint had the composition of Example 8 but with the zinc etidronate replaced by an equal weight of sodium molybdate (comparative Example Y) of the composition of Example 8 but with the zinc etidronate and sodium zinc molybdate replaced by zinc phosphate (comparative Example Z). The results are shown below:—

Example 8 — very little rust staining, no blistering and no evidence of corrosion extending more than 1 mm from the scribe.

Example 9 — results as for Example 8.

Example 10 — substantially no rust staining (even less than Examples 8 and 9), no blistering and no evidence of corrosion extending away from the scribe.

Example 11 — little rust staining (but slightly more than Examples 8 and 9), no blistering and no evidence of corrosion extending more than 1 mm away from the scribe.

Example 12 — results as for Example 10.

Example 2 — very little rust staining (no more than Example 8) but some blistering around the scribe.

Comparative Example Y — rather more rust staining than Examples 8 to 12 and some corrosion extending more than 1 mm from the scribe.

Comparative Example Z — more rust staining than Example Y and some corrosion extending more than 1 mm from the scribe.

The results show that the paints according to Examples 8 to 12 containing an etidronate and a molybdate passivator gave better resistance to corrosion of the steel panel than the paint of Example 2 containing an etidronate alone. The paint of Example 2 gave better resistance to corrosion and particularly to rust staining than the paints containing sodium zinc molybdate alone or zinc phosphate. Some of the panels painted according to Example 8 to 12 and comparative Example Z were also exposed to natural weathering in a severe marine environment at Coquet Island, a small island off the coast of Northumberland, England. After nine months the panels coated with the paints of Examples 8 to 12 showed very little rust staining and no creep of corrosion from the scribe; Examples 9, 10 and 12 in particular showed substantially no rust staining around the scribe. Comparative Example Z showed some rusting around the scribe and creep of corrosion from the scribe.

Example 13

1,177 grams calcium hydroxide was slurried in 4,695 grams water and the slurry was added at 130.5 grams per minute to a stirred solution of 3,913 grams etidronic acid in 15.55 Kg water in the temperature range 65—78°C. A mass of matted needles was precipitated after 30 minutes and addition of the slurry was interrupted while these were dispersed and re-dissolved in the solution. As addition of the slurry was contained a precipitate of plate-like calcium etidronate crystals was formed. These were filtered, water washed and dried in a fluid bed dryer. Analysis of the product indicated a molar ratio of calcium to etidronate of 0.94:1.

Example 14

605 grams of a 60 per cent aqueous solution of etidronic acid was added over 100 minutes to a stirred slurry of 107.4 grams calcium hydroxide in 2 litres distilled water kept in the temperature range 20—35°C. A precipitate of acicular crystals was formed. These were filtered, water washed and dried in a fluid bed dryer. Analysis of the product indicated a molar ratio of calcium to etidronate of 0.94:1.

Examples 13—14
Paint testing

Anti-corrosive paints were made by ball milling the following ingredients:—

| | Parts by Weight | |
|---|---|---|
| | Example 13 | Example 14 |
| Short oil alkyd resin | 20.0 | 20.0 |
| Calcium etidronate plate-like crystals | 16.3 | —— |
| Calcium etidronate acicular crystals | —— | 16.3 |
| Sodium zinc molybdate precipitated onto zinc oxide | 2.0 | 2.0 |
| Talc | 13.5 | 13.5 |
| Titanium oxide | 9.6 | 9.6 |
| Driers and additives | 2.4 | 2.4 |
| Xylene solvent | 38.2 | 38.2 |

The anti-corrosive paints of Examples 13 and 14 were sprayed onto mild steel panels at a dry film thickness of about 100 microns. When the paint film was dry two scribes were scratched through the paint film to reveal the underlying steel in the form of a cross.

The coated panels were subjected to a salt spray test carried out at 90°C. as specified in ASTM—B117.

After 250 hours in the hot salt spray test, the paints of Examples 13 and 14 showed virtually no corrosion or blistering at the scribe and none in the intact areas of the film. Both paints were better in all respects than the zinc phosphate comparison paint.

After 500 hours in the hot salt spray test, the paint of Example 14 showed more corrosion and blistering at the scribe and had as much corrosion as the comparison paint. The paint of Example 13 still showed very little corrosion or blistering, even at the scribe and was markedly superior to the comparison paint.

Examples 13A and 14A

Paints were prepared according to Examples 13 and 14 except that the amount of sodium zinc molybdate precipitated onto zinc oxide was increased to 4.0 parts by weight. The paints were sprayed on mild steel panels at 100 microns thickness and scribed and then subjected to a weathering test at Coquet Island with a comparison panel painted with a zinc phosphate paint. After ten months the paints of Examples 13A and 14A showed very little rusting even at the scribe and were superior to the comparison, which showed some creep of corrosion from the scribe.

Example 15

682 grams of a 60 per cent aqueous solution of etidronic acid was added slowly to a stirred slurry of 400 grams zinc oxide in 1.45 Kg distilled water. A dense white amorphous precipitate was produced and settled when agitation had stopped to leave a clear liquor. The reaction was exothermic. The mixture was filtered and the precipitate was washed with distilled water and dried at 110°C. 863 grams of a zinc etidronate having a zinc to etidronate molar ratio of 2.4:1 was obtained.

As the filtered liquor cooled fine plate-like crystals were precipitated and these were filtered cold, washed and dried. 27.3 grams of a zinc etidronate having a zinc to etidronate molar ratio of 1.8:1 was obtained.

An anti-corrosive paint of 40 per cent by volume solids was prepared based on a short oil alkyd resin having a pigment volume concentration (P.V.C.) of 40 per cent with the above zinc etidronate (the main precipitate of zinc to etidronate molar ratio 2.4:1) used as 40 per cent by volume of the pigment, the remaining pigment being titanium dioxide with a small amount of bentonite.

Example 16

An anti-corrosive paint was prepared according to Example 15 but using the zinc etidronate as 80 per cent by volume of the pigment.

Example 17

A two-pack epoxy anti-corrosive paint was prepared from "Epikote 1001" (Trade Mark) epoxy resin and a pigment comprising 40 per cent by volume of the zinc etidronate of Example 15 with titanium dioxide and a small amount of bentonite. The curing agent for the epoxy was a "Versmid" (Trade Mark) aminofunctional polyamide and the overall solids content was 51 per cent by volume and P.V.C. 40 per cent.

Example 18

A two-pack epoxy anti-corrosive paint was prepared according to Example 19 but using the zinc etidronate as 80 per cent by volume of the pigment.

Examples 15—18
Paint Testing

The anti-corrosive paints of each of Examples 15 to 18 were sprayed onto mild steel panels at a dry film thickness of about 100 microns and scribed and subjected to a salt spray test at 90°C. as specified in ASTM B—117. Similarly coated panels were subjected to a humidity test according to British Standard 3900F2 (100 per cent relative humidity with temperatures cycled between 40°C. and 48°C. to ensure condensation).

As a comparison, paints containing zinc phosphate in place of zinc etidronate (samples 15A to 18A) were prepared and tested.

The panels were assessed after 1,000 hours testing according to ASTM D—1654 (Procedure B). The results are shown in the following Table 1. The panel is assessed according to the percentage of the area showing any corrosion failure or blistering and rated accordingly. The film is the pared back with a scalpel to assess whether there is underfilm corrosion, which is graded as

× — heavy corrosion
+ — moderate corrosion
o — no corrosion

**TABLE 1**

| Panel Reference | HOT SALT SPRAY TEST | | | HUMIDITY TEST | | |
|---|---|---|---|---|---|---|
| | % area failed | Rating Number | Underfilm x=heavy corrosion +=medium corrosion o=no corrosion | % area failed | Rating Number | Underfilm x=heavy corrosion +=medium corrosion o=no corrosion |
| Example 15 | 30 | 4 | o | 3 | 8 | + |
| Example 16 | 6 | 7 | o | 1 | 10 | + |
| Sample 15A | 37 | 3 | + | 100 | 0 | + |
| Sample 16A | 46 | 2 | + | 100 | 0 | + |
| Example 17 | 100 | 0 | + | 0 | 10 | o |
| Example 18 | 93 | 0 | o | 0 | 10 | o |
| Sample 17A | 100 | 0 | o | 0 | 10 | + |
| Sample 18A | 100 | 0 | o | 0 | 10 | o |

The paints containing zinc etidronate showed substantially less corrosion in both the hot salt spray and humidity tests, both in terms of visible corrosion and underfilm corrosion.

Example 19

400 grams of a 50 per cent by weight solution of amino tri(methylene phosphonic acid) was diluted with distilled water to give a 20 per cent by weight solution and heated to 75—80°C. A 20 per cent by weight slurry of 99.0 grams calcium hydroxide in distilled water was heated to 75—80°C. and added to the phosphonic acid solution over 45 minutes with continual stirring. The molar ratio of calcium hydroxide to amino tri(methylene phosphonic acid) was 2:1 (ratio of calcium to phosphonic groups 0.67:1). Following complete addition of the slurry, the solution and the resultant precipitate was held at temperature and stirred for a further two hours. The precipitate was isolated and dried.

Examples 20—26

Calcium and zinc salts of various organic polyphosphonic acids were made by the procedure of Example 19 as set out in the following Table 2:—

**TABLE 2**

| Example No. | Type of Polyphosphonic Acid | Weight of Polyphos-phonic acid | Weight of Ca(OH)2 | Weight of ZnO | Molar Ratio of Ca or Zn to poly-phos-phonic acid | Ratio of Ca or Zn to phosphonic Groups |
|---|---|---|---|---|---|---|
| 20 | Amino tri (methylene phosphonic acid) | 58.5g | 41.7g | - | 2.88:1 | 0.96:1 |
| 21 | Amino tri (methylene phosphonic acid) | 81.0g | - | 68.0g | 3.10:1 | 1.03:1 |
| 22 | Ethylene diamine tetra (methylene phosphonic acid) | 81.8g | 50.0g | - | 4.0:1 | 1.00:1 |
| 23 | Ethylene diamine tetra (methylene phosphonic acid) | 81.8g | - | 54.7g | 4.0:1 | 1.00:1 |
| 24 | Hexamethylene diamine tetra (methylene phosphonic acid | 92.3g | 53.9g | - | 4.0:1 | 1.00:1 |
| 25 | Hexamethylene diamine tetra (methylene phosphonic acid | 92.3g | - | 59.0g | 4.0:1 | 1.00:1 |
| 26 | Diethylenetriamine penta (methylene phosphonic acid | 172.6g | - | 66.5g | 5.45:1 | 1.09:1 |

Each of the polyphosphonate salts prepared in Examples 19—26 can be used in place of calcium etidronate in the paint formulation of Example 2 to give a paint of anti-corrosive properties equal to those of the paint of Example 2.

Example 27

1 mole sodium hydroxide was added to 1 mole etidronic acid in aqueous solution to provide a 20 per cent by weight solution. 1 mole of an aqueous slurry of calcium hydroxide was added over 30 minutes to produce a precipitate of a calcium sodium etidronate which was filtered, washed and dried. This polyphosphonate salt could be used in place of calcium etidronate in the paint formulations of Example 2 and 10 to give a paint of equal anti-corrosive properties in each case.

Example 28

A fast air-drying industrial primer of a type used for example as a primer coating for agricultural impliments was prepared by ball milling the following ingredients:—

| | Per Cent by Weight |
|---|---|
| Drying oil alkyd | 50.23 |
| Calcium etidronate as prepared in Example 13 | 12.40 |
| Sodium zinc molybdate | 1.55 |
| Inert pigments and fillers (calcium carbonate, titanium dioxide, talc, and yellow iron oxide) | 20.07 |
| Drier and additives | 2.39 |
| Xylene solvent | 13.36 |

The paint was applied to phosphated steel panels and was scribed as described in "Paint Testing" of the composition of Example 1. The panels were then subjected to 240 hours salt spray test using the conditions of ASTM B-117. As a comparison a paint was used having the same ingredients apart from the calcium etidronate and sodium zinc molybdate and using zinc chromate (16 per cent by weight of the pigment) as the anti-corrosive pigment.

The panels coated with the paint of Example 28 showed hardly any evidence of corrosion after the salt spray test even at the scribe and were equal to or better than the paint containing zinc chromate both in respect of overall appearance and of absence of rusting at the scribe.

Example 29

An automotive surfacer/primer designed to be applied to phosphated steel and to take an acrylic top coat was prepared from the following ingredients:—

| | Parts by Weight |
|---|---|
| Sodium zinc molybdate | 1.32 |
| Calcium etidronate as prepared in Example 13 | 12.68 |
| Inert pigments (Barytes, China clay, titanium dioxide and Yellow Iron Oxide) | 22.64 |
| Bentonite gel 10% | 2.57 |
| Carbon black predispersion 10% | 4.93 |
| Tall oil epoxy ester resin | 20.94 |
| Urea formaldehyde resin | 1.37 |
| Benzoguanamine resin | 2.13 |
| Driers and additives | 1.24 |
| n-butanol | 0.69 |
| Ethyl glycol monoethyl ether | 0.69 |
| Xylene | 28.80 |

The pigments, bentonite gel and black dispersion were dispersed in the epoxy ester resin. Xylene was added to the dispersion and it was passed through a sand mill to achieve Hegmann reading 7. The remaining ingredients were added with stirring.

The paint was sprayed on phosphated steel panels to give dry film thickness of 30—40 microns and was cured at 163°C. for 20 minutes. The panels were scribed and were subjected to 300 hours salt spray according to ASTM B-117, in conjunction with a comparison using zinc phosphate in place of the calcium etidronate and sodium zinc molybdate. The panels painted according to the invention showed no corrosion on the intact face area and a little corrosion around the scribe and were considerably less corroded than the comparison panels in both areas.

**Claims**

1. An anti-corrosive coating composition comprising a pigment component comprising a phosphorus compound and a substance capable of acting as a corrosion passivator dispersed in a film-forming binder, characterised in that the pigment component comprises (a) a salt comprising a polyvalent metal cation and an organic polyphosphonic acid containing at least two phosphonic groups, the salt having an aqueous solubility of not more than 2 grams per litre, and (b) a corrosion passivator which is a molybdate, tungstate, vanadate, stannate, chromate, manganate, titanate, phosphomolybdate or phosphovanadate containing cations from a divalent metal, the ratio of the polyphosphonate salt (a) to the passivator (b) being 1:1 to 50:1 by weight.

2. An anti-corrosive coating composition according to claim 1, characterised in that the salt has the general formula $M_xR(PO_3)_mH_{(2m-xn)}$, where M represents a metal ion selected from zinc, manganese, magnesium, calcium, barium, aluminium, cobalt, iron, strontium, tin, zirconium, nickel, cadmium and titanium, R represents an organic radical linked to the phosphonate groups by carbon-phosphorus bonds, m is the valency of the radical R and is at least 2, n is the valency of the metal ion M and x is from 0.8m/n to 2m/n.

3. An anti-corrosive coating composition according to claim 1 or claim 2, characterised in that the salt is a salt of a diphosphonic acid of the formula:—

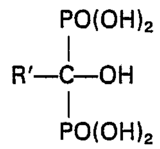

where R′ is a monovalent organic radical.

4. An anti-corrosive coating composition according to claim 3, characterised in that the salt is a salt of etidronic acid.

5. An anti-corrosive coating composition according to claim 1 or claim 2, characterised in that the salt is a salt of an amino compound containing at least two N-methylene-phosphonic acid groups.

6. An anti-corrosive coating composition according to any of claims 1 to 5, characterized in that the salt is a zinc salt.

7. An anti-corrosive coating composition according to any of claims 1 to 5, characterised in that the salt is a manganese salt.

8. An anti-corrosive coating composition according to any of claims 1 to 5, characterised in that the polyphosphonate salt is a calcium salt.

9. An anti-corrosive coating composition according to claim 8, characterised in that the molar ratio of calcium to phosphonate groups is 0.4:1 to 0.6:1.

10. An anti-corrosive coating composition according to claim 9, characterised in that the polyphosphonate salt is a calcium etidronate having a molar ratio of calcium to etidronate groups of about 1:1 and being predominantly in the form of plate-like crystals.

11. An anti-corrosive coating composition according to claim 1, characterised in that the salt is in the form of composite particles formed by precipitating the polyphosphonate salt on the surface of particles of a metal oxide.

12. An anti-corrosive coating composition according to any of claims 1 to 11, characterised in that either the polyphosphonate salt or the pasivator contains zinc.

13. An anti-corrosive coating composition according to any of claims 1 to 12, characterised in that the passivator also contains alkali metal, ammonium or substituted ammonium cations.

14. An anti-corrosive coating composition according to any of claims 1 to 13, characterised in that the passivator is sodium zinc molybdate or zinc molybdate.

15. An anti-corrosive coating composition according to any of claims 1 to 14, characterised in that the passivator is in the form of composite particles formed by precipitating a molybdate of a polyvalent metal on the surface of particles of a carrier pigment.

16. An anti-corrosive coating composition according to any of claims 1 to 15, characterised in that the ratio of the polyphosphonate salt to the passivator is 2:1 to 20:1 by weight.

17. An anti-corrosive coating composition according to claim 16, characterised in that the ratio of the polyphosphonate salt to the passivator is 4:1 to 10:1 by weight.

18. The use of an anti-corrosive coating composition as claimed in any of claims 1 to 17 for application by spray or brush coating to a metal surface as a protective paint against corrosion, rusting or rust staining.

19. The use of a salt of zinc and an organic polyphosphonic acid containing at least two phosphonic acid groups as pigment component dispersed in a film-forming binder as a liquid anti-corrosive coating composition for application by spray or brush coating to a metal surface as a protective paint against corrosion, rusting or rust staining, said salt having a molar ratio of zinc to phosphonate groups of from 0.7:1 to 1.5:1 and an aqueous solubility of not more than 2 grams per litre, and said composition being applied so as to provide a final dry film thickness of from 30 to 100 microns.

20. The use as claimed in claim 19, characterised in that the salt has a molar ratio of zinc to phosphonate groups of from 0.7:1 to 1.0:1.

21. The use as claimed in claim 19, characterised in that the salt is a zinc etidronate having a molar ratio of zinc to etidronate groups of from 2:1 to 3:1.

22. The use of a salt comprising a polyvalent metal cation and an organic polyphosphonic acid containing at least two phosphonic acid groups as pigment component dispersed in a film-forming binder as a liquid anti-corrosive coating composition for application by spray or brush coating to a metal surface as a protective paint against corrosion, rusting or rust staining, said salt having the general formula $M_xR(PO_3)_mH_{(2m-xn)}$, where M represents a metal ion selected from magnesium, calcium and barium, R represents an organic radical linked to the phosphonate groups by carbon-phosphorus bonds, m is the valency of the radical R and is at least 2, n is the valency of the metal ion M and x is from 0.8m/n to 2m/n, said salt having an aqueous solubility of not more than 2 grams per litre, and said composition being applied so as to provide a final dry film thickness of from 30 to 100 microns.

23. The use as claimed in claim 19, 20 or 22, characterised in that the salt is a salt of a diphosphonic acid of the formula:—

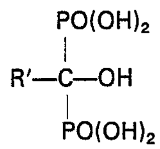

where R' is a monovalent organic radical.

24. The use as claimed in claim 23, characterised in that the salt is a salt of etidronic acid.

25. The use as claimed in claim 19, 20 or 22, characterised in that the salt is a salt of an amino compound containing at least two N-methylene-phosphonic acid groups.

26. The use as claimed in any of claims 19 to 25, characterised in that the salt is in the form of composite particles formed by precipitating the polyphosphonate salt on the surface of particles of a metal oxide.

27. The use as claimed in any of claims 19 to 26, characterised in that the sale has an aqueous solubility less than 0.6 gram per litre.

28. The use as claimed in claim 27, characterised in that the salt has an aqueous solubility of 0.02 to 0.1 gram per litre.

29. The use as claimed in any of claims 18 to 28, characterised in that the coating composition is applied as a primer to a metal surface to inhibit the appearance of rust and the brown staining caused by rust.

30. The use as claimed in any of claims 18 to 28, characterised in that the coating composition is applied to the surface of a ship or an industrial steel structure to inhibit loss of metal by corrosion.

31. The use as claimed in any of claims 18 to 28, characterised in that the coating composition is applied as a shop primer to inhibit the formation at the surface of the metal of corrosion products which would reduce the adhesion of subsequent coats of paint.

32. The use as claimed in any of claims 18 to 31, characterised in that the coating composition is applied to an iron or steel surface.

33. The use of a coating composition as claimed in any of claims 1 to 17 or as defined in any of claims 19 to 28 for application to the exterior of pre-stressed concrete to prevent rust staining.

**Patentansprüche**

1. Korrosionsschutzanstrichzusammensetzung mit einer aus einer Phosphorverbindung und einem in einem filmbildenden Bindemittel dispergierten Stoff, der als Korrosionspassivator wirken kann, bestehenden Pigmentkomponente, dadurch gekennzeichnet, dass die Pigmentkomponente aus (a) einem Salz aus einem mehrwertigen Metallkation und einer organischen Polyphosphonsäure mit mindestens zwei Phosphongruppen, wobei das Salz eine Löslichkeit von nicht mehr als 2 Gramm pro Liter Wasser aufweist, und (b) einem Korrosionspassivator besteht, der ein Molybdat, Wolframat, Vanadat, Stannat,

Chromat, Manganat, Titanat, Phosphomolybdat oder Phosphovanadat mit Kationen eines zweiwertigen Metalls darstellt, wobei das Gewichtsverhältnis des Polyphosphonatsalzes (a) zum Passivator (b) 1:1 bis 50:1 beträgt.

2. Korrosionsschutzanstrichzusammensetzung nach Anspruch 1, dadurch gekennzeichnet, dass das Salz der allgemeinen Formel $M_xR(PO_3)_mH_{(2m-xn)}$ entspricht, worin M für ein unter Zink, Mangan, Magnesium, Calcium, Barium, Aluminium, Kobalt, Eisen, Strontium, Zinn, Zirkon, Nickel, Cadmium und Titan ausgewähltes Metallion und R für einen organischen, über Kohlenstoff-Phosphorbindungen an die Phosphonatgruppen gebundenen Rest stehen sowie m die mindestens 2 betragende Wertigkeit des Restes R, n die Wertigkeit des Metallions M und x 0,8 m/n bis 2 m/n darstellen.

3. Korrosionsschutzanstrichzusammensetzung nach Anspruch 1 oder 2, dadurch gekennzeichnet, dass als Salz ein Salz einer Diphosphonsäure der Formel

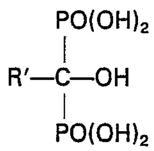

worin R' einen einwertigen organischen Rest bedeutet, vorliegt.

4. Korrosionsschutzanstrichzusammensetzung nach Anspruch 3, dadurch gekennzeichnet, dass das Salz ein Salz der Etidronsäure ist.

5. Korrosionsschutzanstrichzusammensetzung nach Anspruch 1 oder 2, dadurch gekennzeichnet, dass das Salz ein Salz einer Aminoverbindung mit mindestens zwei N-Methylenphosphonsäuregruppen ist.

6. Korrosionsschutzanstrichzusammensetzung nach einem der Ansprüche 1 bis 5, dadurch gekennzeichnet, dass das Salz ein Zinksalz ist.

7. Korrosionsschutzanstrichzusammensetzung nach einem der Ansprüche 1 bis 5, dadurch gekennzeichnet, dass das Salz ein Mangansalz ist.

8. Korrosionsschutzanstrichzusammensetzung nach einem der Ansprüche 1 bis 5, dadurch gekennzeichnet, dass das Polyphosphonatsalz ein Calciumsalz ist.

9. Korrosionsschutzanstrichzusammensetzung nach Anspruch 8, dadurch gekennzeichnet, dass das Molverhältnis von Calcium zu den Phosphonatgruppen 0,4:1 bis 0,6:1 beträgt.

10. Korrosionsschutzanstrichzusammensetzung nach Anspruch 9, dadurch gekennzeichnet, dass das Polyphosphonatsalz ein Calciumetidronat mit einem Molverhältnis von Calcium zu Etidronatgruppen von etwa 1:1 ist und vorwiegend in Form plättchenartiger Kristalle vorliegt.

11. Korrosionsschutzanstrichzusammensetzung nach Anspruch 1, dadurch gekennzeichnet, dass das Salz in Form von durch Ausfällung des Polyphosphonatsalzes auf der Oberfläche von Teilchen eines Metalloxyds gebildeten Verbundteilchen vorliegt.

12. Korrosionsschutzanstrichzusammensetzung nach einem der Ansprüche 1 bis 11, dadurch gekennzeichnet, dass entweder das Polyphosphonatsalz oder der Passivator Zink enthält.

13. Korrosionsschutzanstrichzusammensetzung nach einem der Ansprüche 1 bis 12, dadurch gekennzeichnet, dass der Passivator ferner Alkali-, Ammonium- oder substituierte Ammoniumkationen enthält.

14. Korrosionsschutzanstrichzusammensetzung nach einem der Ansprüche 1 bis 13, dadurch gekennzeichnet, dass als Passivator Natriumzinkmolybdat oder Zinkmolybdat vorliegt.

15. Korrosionsschutzanstrichzusammensetzung nach einem der Ansprüche 1 bis 14, dadurch gekennzeichnet, dass der Passivator in Form durch Ausfällung eines Molybdats eines mehrwertigen Metalls auf der Oberfläche von Teilchen eines Trägerpigments gebildeter Verbundteilchen vorliegt.

16. Korrosionsschutzanstrichzusammensetzung nach einem der Ansprüche 1 bis 15, dadurch gekennzeichnet, dass das Gewichtsverhältnis des Polyphosphonatsalzes zum Passivator 2:1 bis 20:1 beträgt.

17. Korrosionsschutzanstrichzusammensetzung nach Anspruch 16, dadurch gekennzeichnet, dass das Gewichtsverhältnis des Polyphosphonatsalzes zum Passivator 4:1 bis 10:1 beträgt.

18. Verwendung einer Korrosionsschutzanstrichzusammensetzung nach einem der Ansprüche 1 bis 17 zum Auftragen durch Spritzen oder Streichen auf eine Metalloberfläche als Schutzanstrich gegen Korrosion, Rosten oder Rostfleckenbildung.

19. Verwendung eines Salzes aus Zink und einer organischen Polyphosphonsäure mit mindestens zwei Phosphonsäuregruppen als in einem filmbildenden Bindemittel dispergierte Pigmentkomponente als flüssige Korrosionsschutzanstrichzusammensetzung zum Auftragen durch Spritzen oder Streichen auf eine Metalloberfläche als Schutzanstrich gegen Korrosion, Rosten oder Rostfleckenbildung, wobei dieses Salz ein Molverhältnis von Zink zu Phosphonatgruppen von 0,7:1 bis 1,5:1 und eine Löslichkeit von nicht mehr als 2 Gramm pro Liter Wasser aufweist und diese Zusammensetzung zu einer trockenen Endfilmdicke von 30 bis 100 Mikron aufgetragen wird.

20. Verwendung nach Anspruch 19, dadurch gekennzeichnet, dass das Salz ein Molverhältnis von Zink zu Phosphonatgruppen von 0,7:1 bis 1,0:1 aufweist.

21. Verwendung nach Anspruch 19, dadurch gekennzeichnet, dass das Salz ein Zinketidronat mit einem Molverhältnis von Zink zu Etidronatgruppen von 2:1 bis 3:1 ist.

22. Verwendung eines aus einem mehrwertigen Metallkation und einer organischen Polyphosphonsäure mit mindestens zwei Phosphonsäuregruppen bestehenden Salzes als in einem filmbildenden Bindemittel dispergierte Pigmentkomponente als flüssige Korrosionsschutzanstrichzusammensetzung zum Auftragen durch Spritzen oder Streichen auf eine Metalloberfläche als Schutzanstrich gegen Korrosion, Rosten oder Rostfleckenbildung, wobei das Salz der allgemeinen Formel $M_xR(PO_3)_mH_{(2m-xn)}$ entspricht, worin M für ein unter Magnesium, Calcium und Barium ausgewähltes Metallion und R für einen organischen, über Kohlenstoff-Phosphorbindungen an die Phosphonatgruppen gebundenen Rest stehen sowie m die mindestens 2 betragende Wertigkeit des Restes R, n die Wertigkeit des Metallions M und x 0,8 m/n bis 2 m/n darstellen, wobei dieses Salz eine Löslichkeit von nicht mehr als 2 Gramm pro Liter Wasser aufweist und diese Zusammensetzung zu einer trockenen Endfilmdicke von 30 bis 100 Mikron aufgetragen wird.

23. Verwendung nach Anspruch 19, 20 oder 22, dadurch gekennzeichnet, dass das Salz ein Salz einer Diphosphonsäure der Formel

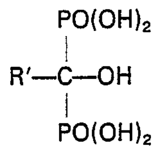

worin R' einen einwertigen organischen Rest bedeutet ist.

24. Verwendung nach Anspruch 23, dadurch gekennzeichnet, dass das Salz ein Salz der Etidronsäure ist.

25. Verwendung nach Anspruch 19, 20 oder 22, dadurch gekennzeichnet, dass das Salz ein Salz einer Aminoverbindung mit mindestens zwei N-Methylenphosphonsäuregruppen ist.

26. Verwendung nach einem der Ansprüche 19 bis 25, dadurch gekennzeichnet, dass das Salz in Form durch Ausfällung des Polyphosphonatsalzes auf der Oberfläche von Teilchen eines Metalloxyds gebildeter Verbundteilchen vorliegt.

27. Verwendung nach einem der Ansprüche 19 bis 26, dadurch gekennzeichnet, dass das Salz eine Löslichkeit von weniger als 0,6 Gramm pro Liter Wasser aufweist.

28. Verwendung nach Anspruch 27, dadurch gekennzeichnet, dass das Salz eine Löslichkeit von 0,02 bis 0,1 Gramm pro Liter Wasser aufweist.

29. Verwendung nach einem der Ansprüche 18 bis 28, dadurch gekennzeichnet, dass die Anstrichzusammensetzung als Grundierung zur Hemmung des Auftretens von Rost und durch Rost verursachten braunen Flecken auf eine Metall- oberfläche aufgetragen wird.

30. Verwendung nach einem der Ansprüche 18 bis 28, dadurch gekennzeichnet, dass die Anstrichzusammensetzung zur Hemmung von Metallabtrag durch Korrosion auf die Oberfläche eines Schiffes oder einer industriellen Stahlkonstruktion aufgetragen wird.

31. Verwendung nach einem der Ansprüche 18 bis 28, dadurch gekennzeichnet, dass die Anstrichzusammensetzung als Fertigungsanstrich zur Hemmung der Bildung von Korrosionsprodukten, welche die Haftung weiterer Anstriche verringern würde, auf die Oberfläche des Metalls aufgetragen wird.

32. Verwendung nach einem der Ansprüche 18 bis 31, dadurch gekennzeichnet, dass die Anstrichzusammensetzung auf eine Eisen- oder Stahloberfläche aufgetragen wird.

33. Verwendung einer Anstrichzusammensetzung nach einem der Ansprüche 1 bis 17, oder wie in einem der Ansprüche 19 bis 28 definiert, zum Auftragen auf die Aussenseite von Spannbeton zur Verhinderung von Rostfleckenbildung.

**Revendications**

1. Composition de revêtement anti-corrosive comprenant un composant de pigment comprenant un composé phosphoré et une substance pouvant jouer le rôle de passivateur de la corrosion dispersés dans un liant filmogène, caractérisée en ce que le composant de pigment comprend (a) un sel comprenant un cation métallique polyvalent et un acide polyphosphonique organique contenant au moins deux groupes phosphoniques, le sel ayant une solubilité dans l'eau inférieure ou égale à 2 grammes par litre, et (b) un passivateur de la corrosion qui est un molybdate, un tungstate, un vanadate, un stannate, un chromate, un manganate, un titanate, un phosphomolybdate ou un phosphovanadate contenant des cations provenant d'un métal divalent, le rapport du sel polyphosphonate (a) au passivateur (b) étant compris entre 1:1 et 50:1 en poids.

2. Une composition de revêtement anti-corrosive selon la revendication 1, caractérisée en ce que le sel a la formule générale $M_xR(PO_3)_mH_{(2m-xn)}$, dans laquelle M représente un ion métallique choisi parmi le zinc, le manganèse, le magnésium, le calcium, le baryum, l'aluminium, le cobalt, le fer, le strontium, l'étain, le zirconium, le nickel, le cadmium et le titane, R représente un radical organique lié aux groupes phosphonates par des liaisons carbone-phosphore, m est la valence du radical R et est au moins égal à 2, n est la valence de l'ion métallique M et x est compris entre 0,8 m/n et 2 m/n.

3. Une composition de revêtement anti-corrosive selon la revendication 1 ou la revendication 2, caractérisée en ce que le sel est un sel d'acide diphosphonique de formule:

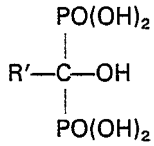

dans laquelle R' est un radical organique monovalent.

4. Une composition de revêtement anti-corrosive selon la revendication 3, caractérisé en ce que le sel est un sel de l'acide étidronique.

5. Une composition de revêtement anti-corrosive selon la revendication 1 ou la revendication 2, caractérisée en ce que le sel est un sel d'un composé aminé contenant au moins deux groupes acides N-méthylènephosphoniques.

6. Une composition de revêtement anti-corrosive selon l'une quelconque des revendications 1 à 5, caractérisée en ce que le sel est un sel de zinc.

7. Une composition de revêtement anti-corrosive selon l'une quelconque des revendications 1 à 5, caractérisée en ce que le sel est un sel de manganèse.

8. Une composition de revêtement anti-corrosive selon l'une quelconque des revendications 1 à 5, caractérisée en ce que le sel de polyphosphonate est un sel de calcium.

9. Une composition de revêtement anti-corrosive selon la revendication 8, caractérisée en ce que le rapport molaire du calcium aux groupes phosphonates est compris entre 0,4:1 et 0,6:1.

10. Une composition de revêtement anti-corrosive selon la revendication 9, caractérisée en ce que le sel polyphosphonate est un étidronate de calcium ayant un rapport molaire du calcium aux groupes étidronates d'environ 1:1 et étant en prédominance sous forme de cristaux en paillettes.

11. Une composition de revêtement anti-corrosive selon la revendication 1, caractérisée en ce que le sel est sous forme de particules composites formées par précipitation du sel polyphosphonate à la surface de particules d'un oxyde métallique.

12. Une composition de revêtement anti-corrosive selon l'une quelconque des revendications 1 à 11, caractérisée en ce que soit le sel polyphosphonate, soit le passivateur contient du zinc.

13. Une composition de revêtement anti-corrosive selon l'une quelconque des revendications 1 à 12, caractérisée en ce que le passivateur contient également des cations de métaux alcalins, ammoniums ou ammoniums substitués.

14. Une composition de revêtement anti-corrosive selon l'une quelconque des revendications 1 à 13, caractérisée en ce que le passivateur est le molybdate de sodium zinc ou le molybdate de zinc.

15. Une composition de revêtement anti-corrosive selon l'une quelconque des revendications 1 à 14, caractérisée en ce que le passivateur est sous forme de particules composites formées par précipitation d'un molybdate de métal polyvalent à la surface de particules d'un pigment support.

16. Une composition de revêtement anti-corrosive selon l'une quelconque des revendications 1 à 15, caractérisée en ce que le rapport du sel polyphosphonate au passivateur est compris entre 2:1 et 20:1 en poids.

17. Une composition de revêtement anti-corrosive selon la revendication 16, caractérisée en ce que le rapport du sel polyphosphonate au passivateur est compris entre 4:1 et 10:1 en poids.

18. L'emploi d'une composition de revêtement anti-corrosive selon l'une quelconque des revendications 1 à 17 pour l'application, par vaporisation ou par revêtement au pinceau, à une surface métallique en tant que peinture protectrice contre la corrosion, la rouille ou les taches de rouille.

19. L'emploi d'un sel de zinc et d'un acide polyphosphonique organique contenant au moins deux groupes acides phosphoniques en tant que composant de pigment dispersé dans un liant filmogène sous forme d'une composition de revêtement anti-corrosive liquide pour l'application, par vaporisation ou par revêtement au pinceau, à une surface métallique en tant que peinture protectrice contre la corrosion, la rouille ou les taches de rouille, ledit sel ayant un rapport molaire du zinc aux groupes phosphonates compris entre 0,7:1 et 1,5:1 et une solubilité dans l'eau inférieure ou égale à 2 grammes par litre, et ladite composition étant appliquée de manière à fournir une épaisseur finale de film sec comprise entre 30 et 100 microns.

20. L'emploi selon la revendication 19, caractérisé en ce que le sel a un rapport molaire du zinc aux groupes phosphonates compris entre 0,7:1 et 1,0:1.

21. L'emploi selon la revendication 19, caractérisé en ce que le sel est un étidronate de zinc ayant un rapport molaire du zinc aux groupes étidronates compris entre 2:1 et 3:1.

22. L'emploi d'un sel comprenant un cation métallique polyvalent et un acide polyphosphonique organique contenant au moins deux groupes acides phosphoniques en tant que composant de pigment dispersé dans un liant filmogène sous forme de composition de revêtement anti-corrosive liquide pour l'application, par vaporisation ou par revêtement au pinceau, à une surface métallique en tant que peinture protectrice contre la corrosion, la rouille ou les taches de rouille, ledit sel ayant la formule générale $M_xR(PO_3)_mH_{(2m-ax)}$, dans laquelle M représente un ion métallique choisi parmi le magnésium, le calcium et le

baryum, R représente un radical organique lié aux groupes phosphonates par des liaisons carbone-phosphore, m est la valence du radical R et est au moins égal à 2, n est la valence de l'ion métallique M et x est comprise entre 0,8 m/n et 2 m/n, ledit sel ayant une solubilité dans l'eau inférieure ou égale à 2 grammes par litre et ladite composition étant appliquée de manière à fournir une épaisseur finale de film sec comprise entre 30 et 100 microns.

23. L'emploi selon la revendication 19, 20 ou 22, caractérisé en ce que le sel est un sel d'un acide diphosphonique de formule:

$$\begin{array}{c} PO(OH)_2 \\ | \\ R'—C—OH \\ | \\ PO(OH)_2 \end{array}$$

dans laquelle R' est un radical organique monovalent.

24. L'emploi selon la revendication 23, caractérisé en ce que le sel est un sel de l'acide étidronique.

25. L'emploi selon la revendication 19, 20 ou 22, caractérisé en ce que le sel est un sel d'un composé aminé contenant au moins deux groupes acides N-méthylènephosphoniques.

26. L'emploi selon l'une quelconque des revendications 19 à 25, caractérisé en ce que le sel est sous forme de particules composites formées par précipitation du sel polyphosphonate à la surface de particules d'un oxyde métallique.

27. L'emploi selon l'une quelconque des revendications 19 à 26, caractérisé en ce que le sel a une solubilité dans l'eau inférieure à 0,6 gramme par litre.

28. L'emploi selon la revendication 27, caractérisé en ce que le sel a une solubilité dans l'eau comprise entre 0,02 et 0,1 gramme par litre.

29. L'emploi selon l'une quelconque des revendications 18 à 28, caractérisé en ce que le composition de revêtement est appliquée sous forme d'une couche de fond à une surface métallique pour inhiber l'apparition de la rouille et les taches brunes causées par la rouille.

30. L'emploi selon l'une quelconque des revendications 18 à 28, caractérisé en ce que la composition de revêtement est appliquée à la surface d'un navire ou d'une structure industrielle en acier pour inhiber la perte de métal par corrosion.

31. L'emploi selon l'une quelconque des revendications 18 à 28, caractérisé en ce que la composition de revêtement est appliquée sous forme d'une couche de fond passée à l'atelier pour inhiber la formation à la surface du métal de produits de corrosion qui diminueraient l'adhésion des couches de peinture suivantes.

32. L'emploi selon l'une quelconque des revendications 18 à 31, caractérisé en ce que la composition de revêtement est appliquée à une surface de fer ou d'acier.

33. L'emploi d'une composition de revêtement selon l'une quelconque des revendications 1 à 17 ou tel qu'il est défini dans l'une quelconque des revendications 19 à 28 pour l'application au béton extérieur précontraint pour éviter l'apparition des taches de rouille.